Europäisches Patentamt

European Patent Office

Office européen des brevets

(19)

(11) Numéro de publication : **0 137 027**
**B1**

(12) **FASCICULE DE BREVET EUROPÉEN**

(45) Date de publication du fascicule du brevet :
08.07.87

(21) Numéro de dépôt : **84900992.3**

(22) Date de dépôt : **29.02.84**

(86) Numéro de dépôt international :
**PCT/FR 84/00045**

(87) Numéro de publication internationale :
**WO/8403468 (13.09.84 Gazette 84/22)**

(51) Int. Cl.⁴ : **B 29 C 33/60**, B 29 C 69/00

(54) PROCEDE DE CONDITIONNEMENT, SOUS FORME DE BLOC OU DE PROFILE, D'UNE COMPOSITION ADHESIVE PERMANENT, INSTALLATION POUR ET CONDITIONNEMENT OBTENU PAR LA MISE EN OEUVRE ·DE CE PROCEDE.

(30) Priorité : **01.03.83 FR 8303387**

(43) Date de publication de la demande :
**17.04.85 Bulletin 85/16**

(45) Mention de la délivrance du brevet :
**08.07.87 Bulletin 87/28**

(84) Etats contractants désignés :
**AT BE CH DE GB LI NL SE**

(56) Documents cités :
**DE-A- 2 037 878**
**FR-A- 1 327 318**
**FR-A- 1 337 866**
**GB-A- 1 579 890**
**US-A- 2 560 047**

(73) Titulaire : **SOCIETE NOUVELLE RAFFINERIE MERI-
DIONALE DE CERESINES-BELIX**
**2-4 rue Clovis Hugues**
**F-93700 Drancy (FR)**

(72) Inventeur : **VIEL, Gérard, Henri**
**62, rue Saint-Lazare**
**F-60800 Crepy en Valois (FR)**

(74) Mandataire : **DEGRET, Jacques**
**Cabinet Degret 24, place du Général Catroux**
**F-75017 Paris (FR)**

## Description

La présente invention est relative à un procédé de conditionnement, sous forme de bloc ou de profilé, d'une matière adhésive permanente enrobée de grains d'une matière poudreuse, et plus particulièrement à un procédé de conditionnement de masses thermofusibles physiquement présentées sous formes variées et en l'état pâteux, plastique, élastique, semi-solide, solide, selon leur nature et leurs constituants.

La présente invention a également pour objet un dispositif pour la mise en œuvre dudit procédé.

Dans la conduite de nombreuses activités chimiques et industrielles, il est connu, courant et nécessaire, d'avoir à utiliser des compositions adhésives permanentes, c'est-à-dire des masses, qui, à froid, et plus particulièrement à la température ordinaire de manipulation dont on sait qu'elle est voisine de 20 °C, présentent un ou plusieurs des critères suivants :

adhésivité intrinsèque de la masse,

collant superficiel ou « tack » dans les conditons normales de température et de pression,

sensibilité à la pression,

naissance de changement d'état en surface (adhésivité) due à une élévation naturelle de température (période estivale par exemple).

Sous la désignation générique de « compositions adhésives permanentes » se trouvent donc compris :

a) des résines collantes (colophanes, coumarones — indènes, aliphatiques),

b) des cires souples tacky qui développent une certaine adhésivité de surface,

c) certains grades de polymères (polypropylènes, polyisobutènes) et de copolymères,

d) certains brais et bitumes peu susceptibles, c'est-à-dire peu aptes à la déformation,

e) des brais et bitumes modifiés par résines, plastifiants et élastomères,

f) certains élastomères, tel par exemple le caoutchouc butyl,

g) les diverses formules de hot-melt adhésifs, comprenant au moins un polymère, au moins une résine naturelle ou synthétique, un plastifiant et éventuellement une charge, et

h) d'une façon générale tous les produits en leur état naturel et les produits élaborés, éventuellement chargés, qui développent une adhésivité à froid selon les critères définis ci-dessus.

Du fait de l'immanence de leurs propriétés d'adhésivité à froid, il est bien évident qu'il faut protéger les diverses compositions qui appartiennent à l'énumération qui précède, aussi bien dans leur manipulation que pour leur transport ou leur stockage, pour éviter qu'elles s'agglomèrent entre elles ou encore que des impuretés s'agglomèrent à elles.

De nombreuses techniques ont été proposées et ont été mises en œuvre pour, dans cet esprit, conditionner et emballer les compositions adhésives permanentes, et ainsi les protéger contre leur autoagglomération et l'agglomération d'impuretés.

En premier lieu, il est connu de conditionner ce type de compositions dans des contenants de différents volumes et formes (tonnelets, barquettes, sacs) dont la face interne est revêtue de matière anti-adhérentes, telles que des cires spéciales, ou plus fréquemment enduite de compositions siliconées. Cette technique de protection a toutefois pour inconvénients le prix élevé des contenants et l'obligation pour l'utilisateur de procéder chez lui au démoulage des masses conditionnées.

En second lieu, il est connu de protéger les compositions adhésives permanentes en les conditionnant dans des contenants de différents volumes et formes (tonnelets, fûts, seaux), généralement de forme cylindrique, métalliques pour la plupart et non protégés intérieurement.

Dans chacun de ces cas, le contenu adhère bien évidemment au contenant. Cette deuxième technique de protection a en conséquence deux inconvénients évidents : a) pour évacuer le contenu de sorte à alimenter les applicateurs de l'utilisateur, des moyens spéciaux (plateaux chauffants ou autres systèmes assurant la fonte du produit et pompes spéciales de distribution) sont nécessaires ; or tous ces équipements spéciaux, plateaux chauffants, fondoirs, pompes spéciales, sont d'un prix très élevé, et b) la technique de protection mise en œuvre génère des pertes significatives de matière protégée, puisqu'il subsiste sur les parois du contenant, et surtout sur le fond de celui-ci, une quantité importante de matière qui ne peut être pompée à cause du collage.

En troisième lieu, il est connu de conditionner ce type de compositions dans des contenants de différents volumes et formes, de plus petits volumes toutefois, types plateaux, dans lesquels sont creusées des alvéoles aptes à contenir de 100 à 1 000 grammes d'un bloc adhésif. De tels plateaux sont réalisés en matière plastique spéciale, de sorte que les parois des alvéoles présentent des caractéristiques d'anti-adhérence, et ces plateaux servent alors d'emballage à la composition conditionnée.

Cette technique de protection présente également deux inconvénients majeurs : a) le prix élevé des contenants type plateaux, et b) l'obligation pour l'utilisateur de procéder par lui-même à un démoulage souvent peu aisé, notamment lorsque les compositions adhésives permanentes présentent peu ou pas de retrait lors de leur changement d'état.

En quatrième lieu, il est connu de présenter les compositions adhésives permanentes sous forme de joncs, de blocs, de mini-blocs, de bandes, de profilés, de pains, enrobés d'un film mince, généralement de polyéthylène ou de polypropylène, ou d'un complexe polyéthylène-polypropylène. Cette technique d'enrobage par film est toutefois encore d'un coût élevé.

En outre, le choix des films aptes à une telle protection est assez restreint car, d'une part il est nécessaire que les films ne fondent pas lors du coulage de la composition à enrober, laquelle peut être distribuée à 160 °C et quelquefois plus, et d'autre part il est indispensable qu'ils se marient parfaitement à la composition dans l'opération de refonte de celle-ci, en vue de son utilisation, puisque dorénavant la composition protégée est inséparable de son film protecteur.

Enfin, cette quatrième technique demeure malgré tout limitée à quelques types de matières adhésives thermofusibles, puisqu'il est évident qu'on ne peut gainer que les produits dont la viscosité est adaptée au principe.

En cinquième lieu, il est connu d'enrober par malaxage poussé en milieu pulvérulent des blocs d'une matière thermofusible faiblement adhésive, nommément les caoutchoucs, purs ou en mélange, pour les protéger avant leur vulcanisation et/ou pour les presser parfaitement pendant leur vulcanisation. Cette technique de protection par enrobage, qui est décrite par exemple par le brevet DE-A-2 037 878, présente toutefois de nombreux inconvénients dont : a) l'irrégularité et, d'une façon générale, l'excès de la matière poudreuse d'enrobage, b) le pourcentage élevé de cette matière poudreuse de protection, surtout dans le cas de l'enrobage de granulés qui présentent donc une surface spécifique élevée, et c) les problèmes qui peuvent résulter lors des utilisations ultérieures des caoutchoucs ainsi enrobés, dès lors précisément que la matière d'enrobage, dont on sait qu'elle est différente de la matière enrobée, constitue un pourcentage élevé et non négligeable susceptible d'entraver ou de désorganiser les opérations que l'utilisateur doit pratiquer sur les caoutchoucs ainsi protégés.

La présente invention a pour but de pallier l'ensemble des inconvénients précités et, à cet effet, elle propose un procédé et un dispositif de conditionnement qui permettent la protection de compositions adhésives permanentes à coût réduit, sans démoulage au moment de l'utilisation des compositions protégées d'où un gain de temps appréciable, sans perte de matière, sans investissement dans des matériels spéciaux pour le chauffage et/ou le transfert des compositions protégées, et enfin et surtout qui sont d'une grande polyvalence puisque toutes les compositions adhésives permanentes définies en objet sont susceptibles d'être conditionnées et protégées par les procédé et installation de l'invention.

La présente invention a donc pour premier objet un procédé de conditionnement, sous forme de bloc ou de profilé, d'une composition adhésive permanente, enrobée de grains de matière poudreuse, pour éviter lors des opérations de stockage et de manutention dudit conditionnement, démoulé ou transporté à même un moule, son collage à un autre conditionnement ou son agglomération à des impuretés, ledit procédé comprenant l'étape de la coulée de ladite composition dans le moule, pour la mise en forme du conditionnement (voir DE-A-2 037 878), et étant caractérisé en ce que, avant coulée, on réalise sur la totalité de la face intérieure du moule un écran de matière poudreuse, en ce que l'on maintient cohérent ledit écran pendant toute l'opération de coulage de sorte qu'il y ait liaison permanente des grains de la matière poudreuse entre eux, la formation de l'écran poudreux et le maintien de sa cohérence étant obtenus par voie électrostatique, et en ce que, après durcissement et mise en forme, on démoule un conditionnement dont toutes les surfaces antérieurement en regard de la face intérieure du moule sont protégées par l'écran de matière poudreuse.

Par la mise en œuvre d'un tel procédé, il est clair que chaque conditionnement protégé est parfaitement et entièrement enveloppé par un écran de matière poudreuse dont l'épaisseur est régulière et fine, et en tout état de cause dosée très exactement, si bien que la quantité de matière poudreuse nécessaire à la protection est faible et d'un pourcentage, par rapport à la composition enrobée, qui est parfaitement connu de l'utilisateur.

Ainsi, la matière poudreuse, si elle est chimiquement inerte, est inapte à créer des problèmes lors de l'application de la composition adhésive permanente. En revanche, si la matière poudreuse d'enrobage est choisie comme devant faire partie de la formulation à laquelle est destinée la composition adhésive permanente, elle peut par avance être appliquée en tant qu'écran de protection en quantité telle qu'il ne sera plus nécessaire d'en ajouter pour réaliser entièrement la formulation, ou encore elle est prévue en quantité insuffisante, mais parfaitement déterminée, donc susceptible d'être amenée au pourcentage idéal lors de l'addition ultérieure de tous les autres constituants appartenant à ladite formulation.

Le fait que la réalisation de l'écran avant coulage et le maintien de la cohérence de cet écran pendant toute la durée du collage sont obtenus par voie électrostatique permet à l'évidence de former un écran poudreux, régulier, homogène, continu, quelles que soient les formes, en creux et en relief, de la face intérieure du moule, d'où l'assurance de créer un écran de protection dont l'épaisseur est exactement en rapport avec la masse de la composition adhésive permanente à conditionner. En outre, cette technique garantit la possibilité de couler toute composition adhésive permanente thermofusible sans déplacement ni déformation de l'écran de matière poudreuse, puisque celui-ci est « fixé électriquement ».

Dans une variante de mise en œuvre, l'écran est obtenu par superposition de plusieurs couches de grains de matière poudreuse dont, après démoulage, on récupère éventuellement les couches les plus extérieures.

Cette technique permet d'économiser autant que faire se peut la matière poudreuse constituant l'écran de protection, de même qu'elle permet de ramener si nécessaire à la valeur idéale le pourcentage de cette matière poudreuse par rapport à la composition adhésive permanente totalement enrobée.

Pour une mise en œuvre particulière, dans laquelle on procède au coulage de la composition adhésive permanente dans un moule ouvert à sa partie supérieure, on protège, après durcissement et avant démoulage, la face supérieure sensiblement horizontale du conditionnement mis en forme, soit en saupoudrant de grains d'une matière poudreuse identique ou différente de celle disposée en écran, soit par enduction d'une matière liquide grasse.

Dans cette variante, la matière poudreuse destinée à protéger la face supérieure du conditionnement est, au choix de l'utilisateur, identique ou différente de celle disposée en écran entre la face intérieure du moule et les surfaces en regard du conditionnement.

La présente invention a également pour objet un dispositif pour la mise en œuvre du procédé tel que revendiqué ci-dessus comprenant, un moule pour recevoir la coulée de la composition adhésive permanente et pour mettre en forme le conditionnement à réaliser à partir de cette composition (voir DE-A-2 037 878), caractérisé en ce qu'il comprend des moyens pour former sur la totalité de la face intérieure de ce moule un écran de matière poudreuse, des moyens pour rendre chaque grain de la matière poudreuse porteur d'une charge électriquement positive afin de former sur la totalité de la face intérieure de ce moule un écran de matière poudreuse, des moyens pour mettre le moule à la terre ou à la masse et ainsi maintenir cet écran cohérent par voie électrostatique pendant toute l'opération de coulage, et des moyens pour démouler le conditionnement en sorte que toutes les surfaces antérieurement en regard de la face intérieure du moule soient protégées par l'écran de matière poudreuse.

Dans une première variante de réalisation, le dispositif comprend au moins un moule formé en deux parties, dénommées respectivement fond et couvercle, sur la totalité de la face intérieure de chacune d'elles est réalisé et maintenu cohérent un écran de matière poudreuse et qui reçoivent chacune une coulée de la composition adhésive permanente.

Dans ce cas, le dispositif comprend également des moyens pour rapprocher les deux parties du moule et mettre en contact les faces supérieures de chaque demi-conditionnement mis en forme dans l'une et l'autre parties du moule, et des moyens pour faire adhérer fortement les deux demi-conditionnements après une éventuelle réactivation de leur interface.

Dans une autre variante de réalisation, le dispositif pour la mise en œuvre du procédé selon l'invention comprend un moule ouvert à sa partie supérieure, des moyens pour former et maintenir cohérent sur la totalité de la face intérieure de ce moule un écran de matière poudreuse, des moyens pour couler la composition adhésive permanente à l'intérieur du moule tout en maintenant parfaitement cohérent l'écran de matière poudreuse, des moyens pour protéger la face supérieure sensiblement horizontale du conditionnement mis en forme, soit par saupoudrage de grains d'une matière poudreuse, soit par enduction d'une matière liquide grasse, et des moyens pour démouler le conditionnement ainsi totalement protégé.

Le conditionnement, sous forme de bloc ou de profilé, d'une composition adhésive permanente mis en œuvre dans la première des deux variantes d'installation exposées ci-dessus, présente extérieurement, en surface, un écran de matière poudreuse, d'épaisseur fine et régulière, qui protège totalement et parfaitement la composition adhésive permanente.

Par sa mise en œuvre dans la seconde variante de dispositif, le conditionnement présente extérieurement, en surface, un écran de matière poudreuse, d'épaisseur fine et régulière, qui protège parfaitement toutes les surfaces de la composition adhésive permanente, exceptée la surface supérieure du bloc ou du profilé qu'elle définit, ladite face supérieure étant quant à elle protégée par enduction d'une matière liquide grasse ou par saupoudrage de grains d'une matière poudreuse différente de celle qui constitue l'écran.

La matière poudreuse qui constitue l'écran est avantageusement une partie de la charge, dans le cas particulier où la composition doit être chargée, ou encore tout ou partie de l'un des constituants de la formulation idéale, par exemple un produit anti-oxydant ou un produit ignifugeant.

De l'exposé qui vient d'être donné de l'invention, il résulte que la mise en œuvre du nouveau procédé proposé présente de nombreux avantages relativement aux techniques de l'art antérieur résumées en préambule.

Ainsi, vis-à-vis de la première technique de protection rappelée en préambule, l'invention a pour avantage de diminuer notablement le coût du conditionnement (disparition du contenant) et d'éliminer toutes les opérations propres au démoulage au moment de l'utilisation, d'où un gain de temps considérable.

Relativement à la seconde technique, l'invention évite toute perte de matière et évite à l'utilisateur d'investir dans un équipement en matériels spéciaux pour le transfert.

Relativement à la troisième technique rappelée, l'invention a pour avantage de réduire le coût du conditionnement, en substituant un écran de matière poudreuse de protection à des emballages en forme de plateau réalisés en une matière spéciale traitée anti-adhérence, et d'éliminer les opérations de démoulage, puisqu'à l'instant de son utilisation la composition adhésive distribuée en bloc 18-13 ou en profilé est utilisée telle quelle.

Vis-à-vis de la quatrième technique, l'invention permet une très grande polyvalence du fait du grand choix dans la nature et dans les propriétés de la poudre destinée à former l'écran de protection. En outre, l'invention permet de conditionner la quasi-totalité des compositions adhésives permanentes définies en objet. Dans la pratique, l'invention s'applique à la protection par isolation de toutes les compositions adhésives, exceptées celles qui fluent excessivement puisqu'alors, en cas de variation excessive de la forme initiale du bloc ou du profilé, il n'est pas certain que la protection par écran poudreux conserve sa répartition homogène.

Relativement à la cinquième technique, l'invention permet de conditionner toutes les compositions adhésives, et ce quelle que soit la qualité d'adhésivité de ces compositions. En outre, le procédé selon l'invention garantit une parfaite régularité et une parfaite homogénéité de la couche poudreuse de protection, ce que ne saurait garantir la technique d'enrobage réalisée en malaxeur. Enfin, à masses de compositions adhésives protégées égales, le procédé selon l'invention assure une réduction considérable de la masse de matière poudreuse nécessaire à la constitution de bons écrans de protection, à savoir que le procédé selon l'invention demande environ trente fois moins de matière poudreuse que la technique d'enrobage des masses de caoutchoucs à stocker et/ou à vulcaniser. D'ailleurs, le fait que la quantité de matière poudreuse nécessaire à une bonne protection représente une quantité infinitésimale de la masse protégée permet, selon certaines applications de la présente invention, d'utiliser pour cet écran une matière appartenant à la formulation finale idéale ; en revanche le fait que la quantité de matière poudreuse nécessaire à protéger les masses de caoutchoucs soit importante exclut d'emblée que la matière de protection en question appartienne à la formulation idéale, exceptée en tant que charge.

Pour mieux faire comprendre l'objet de la présente invention, on va en décrire ci-après, à titre d'exemples purement illustratifs et non limitatifs, diverses formes de mise en œuvre, en référence aux dessins annexés sur lesquels :

les figures 1a et 1b sont des représentations schématiques, en coupes transversales, d'installations permettant la mise en œuvre de l'invention, respectivement à moule ouvert et à moule en deux parties symétriques,

la figure 2 est une vue en coupe longitudinale d'une chaîne de conditionnement utilisant les moules de la figure 1b,

la figure 3 est une vue de détail, en coupe transversale, de l'opération de formage des blocs de composition adhésive permanente par collage de deux demi-conditionnements symétriques,

la figure 4 est une vue de détail, en coupe transversale, de l'opération de démoulage des blocs obtenus au cours de l'opération représentée à la figure 3,

la figure 5 est une vue schématique, en perspective, d'un conditionnement obtenu sur l'installation des figures 1b et 2 à 4, et

la figure 6 est une vue en perspective d'une variante d'installation fonctionnant en continu pour le collage de demi-conditionnements puis leur démoulage.

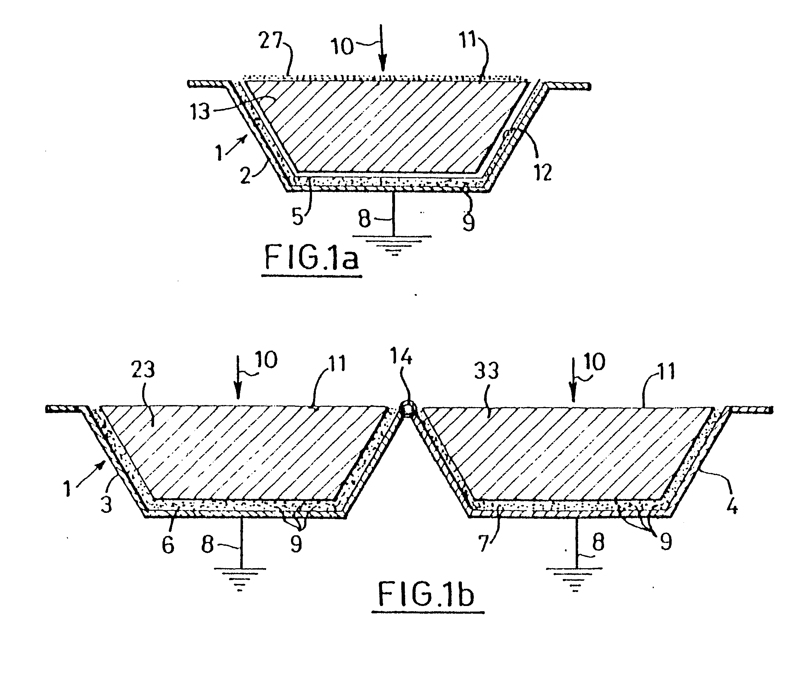

En se référant aux dessins, on voit que l'on a désigné par I dans son ensemble un moule à une ou n chambres pour la mise en forme de un à n blocs d'une composition adhésive permanente, le moule étant soit en une partie, ouvert vers le haut (repéré par 2 à la figure 1a), soit en deux parties, respectivement un fond 3 et un couvercle 4, ainsi qu'il est visible en particulier sur les figures 1b et 2 à 4. Les chambres sont repérées respectivement par 5 pour le moule ouvert 2, 6 et 7 pour le fond 3 et le couvercle 4 du moule en deux parties. Lesdites deux parties sont de préférence égales et symétriques, ainsi qu'il est représenté sur les dessins, ou en variante inégales, le couvercle étant par exemple plat et le fond délimitant à lui seul la chambre de mise en forme du bloc ; cette troisième variante de construction permet, par exemple par injection, l'introduction de la composition adhésive permanente dans la chambre du fond, les faces intérieures du fond et du couvercle ayant au préalable été protégées par un écran poudreux conformément à l'invention, le couvercle étant simplement désaccouplé du fond après mise en forme et durcissement du bloc et le fond étant retourné pour permettre le démoulage dudit bloc.

Cette troisième variante de mise en œuvre dans un moule en deux demi-coquilles dissymétriques sera toutefois plus complexe à conduire notamment en ce qui concerne l'opération d'injection dont on sait qu'elle est toujours plus délicate à effectuer qu'une opération de simple coulage.

Chaque chambre de moulage 5, 6, 7, étant propre, on procède au poudrage électrostatique de ladite chambre par tout procédé connu d'une technique voisine, par exemple pour l'enrobage de câbles électriques, ou pour la peinture des radiateurs, des bicyclettes, et d'une façon générale de tous objets de forme compliquée. Pour illustration, le brevet US-A-2 560 047 montre l'enrobage de pneus, reliés à la masse, par des grains de poudre, par exemple de talc, qui sont soufflés vers une électrode, sur laquelle lesdits grains acquièrent une charge électrique positive, puis vers les pneus à la surface desquels ils adhèrent électrostatiquement.

Dans l'installation de l'invention, toutes les parties 2, 3 et 4 des moules sont mises à la terre ou à la masse, selon 8, tandis que l'on procède au pistoletage des moules, ou à leur passage dans un lit de fluidisation, de manière à déposer sur la face intérieure de toutes les parties des moules, par phénomène électrostatique, des grains d'une matière poudreuse porteurs chacun d'une charge électriquement positive. Les grains de la matière poudreuse auront donc été très fortement chargés électriquement (+), sous des potentiels élevés de l'ordre de 20 000 à 80 000 volts par exemple, d'où leur forte attirance sur la face intérieure des chambres des moules qui constituent un pôle électriquement contraire à celui commun à tous les grains chargés.

Il est clair que cette technique permet de former, ainsi qu'il est visible en 9, un écran poudreux, régulier, homogène, continu, d'épaisseur relativement fine et en tout état de cause régulière quelle que soit la forme, creux, reliefs et recoins, des chambres 5, 6 et 7 à remplir. En outre, cette technique de formation d'écran poudreux par phénomène électrostatique permet de définir une épaisseur d'écran (de l'ordre de 10 à 80 μm) exactement en rapport avec les masses à conditionner.

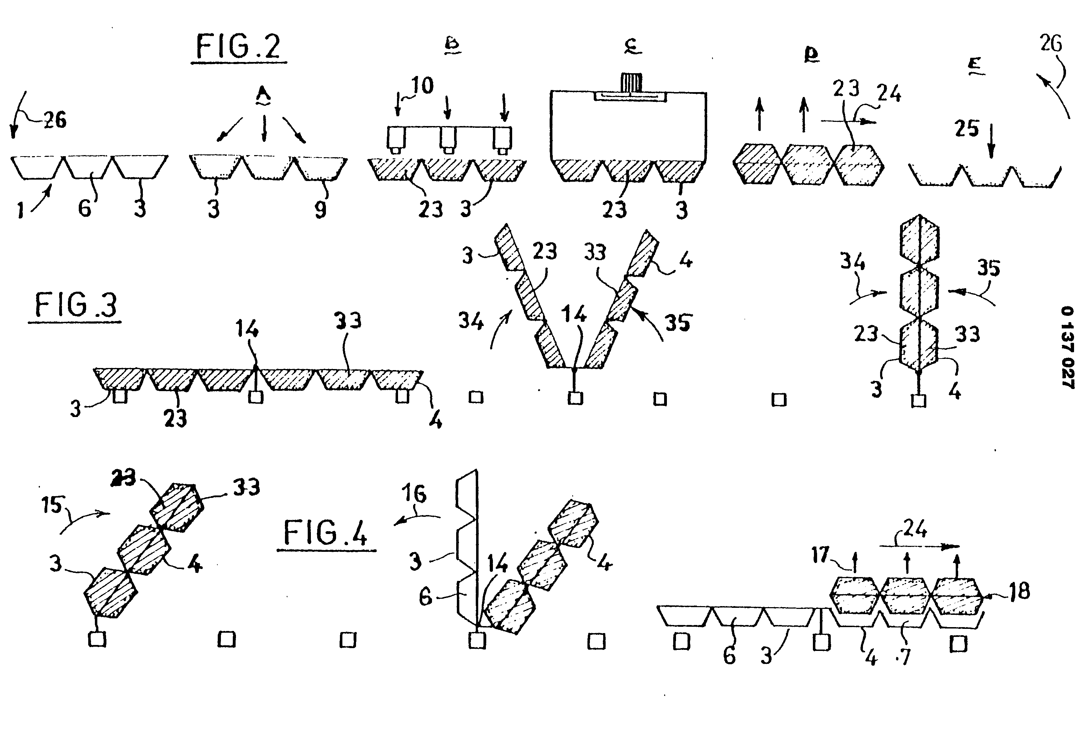

Après l'opération de poudrage électrostatique repérée par A sur la figure 2, on procède à l'opération de coulage de la composition adhésive permanente dans toutes les chambres des moules dont les faces intérieures sont ainsi protégées par un écran poudreux. Le coulage de la composition, repéré par les flèches 10 sur la figures 1 et 2, est dosée volumétriquement en sorte que, dans chaque chambre, la composition affleure sensiblement le sommet de ladite chambre en forme un plan de surface 11 à l'horizontale de ce sommet.

Pendant toute la durée de l'opération de coulage, l'écran poudreux 9, qui a été « fixé électriquement », reste donc parfaitement cohérent, sans risque de dissociation, si bien que la composition adhésive permanente ne vient jamais au contact de la face intérieure des moules et n'a donc aucun risque d'y adhérer (repère B de la figure 2).

Les grains de la matière poudreuse constituent en quelque sorte un écran à une couche ou à plusieurs couches superposées, totalement imperméable à la composition coulée ; cet écran se trouve donc symbolisé par le trait fin continu 12 de la figure 1a.

Les blocs de matière, respectivement 13-23-33, ainsi formés dans les chambres 5-6-7 sont refroidis, par exemple par soufflage d'air frais, pour accélérer leur durcissement et leur mise en forme (repère C de la figure 2).

A cet instant, divers procédés d'achèvement de la protection des conditionnements à réaliser peuvent être mis en œuvre.

Dans l'installation des figures 2 à 4 dans laquelle le moule est formé en deux parties, on avait pris soin de réaliser lesdites deux parties en deux demi-coquilles symétriques, respectivement gauche 3 et droite 4, articulées l'une et l'autre autour de leur axe longitudinal médian 14. Lesdites deux demi-coquilles sont relevées symétriquement autour de leur axe commun 14, ainsi qu'il est particulièrement visible en 34-35 à la figure 3 de détail de la figure 2, jusqu'à prendre une nouvelle position sensiblement verticale dans laquelle les faces supérieures 11 de chaque demi-conditionnement, respectivement 23 et 33, viennent en contact et adhèrent fortement l'une à l'autre du fait de la non-protection desdites surfaces.

Après collage des demi-conditionnements l'un sur l'autre, on procède au démoulage des blocs en faisant basculer selon la flèche 15 l'ensemble constitué des deux demi-coquilles gauche 3 et droite 4, puis dissociant par basculement la demi-coquille gauche de la demi-coquille droite, par pivotement contraire autour de l'axe 14, ainsi qu'il est représenté par la flèche 16, et enfin en dégageant par tout système adapté de préhension 17, relativement aux chambres 7 des demi-coquilles 4, les conditionnements sous forme de bloc obtenus chacun par collage de deux demi-conditionnements par leurs surfaces supérieures nues, c'est-à-dire non protégées par l'écran de matière poudreuse.

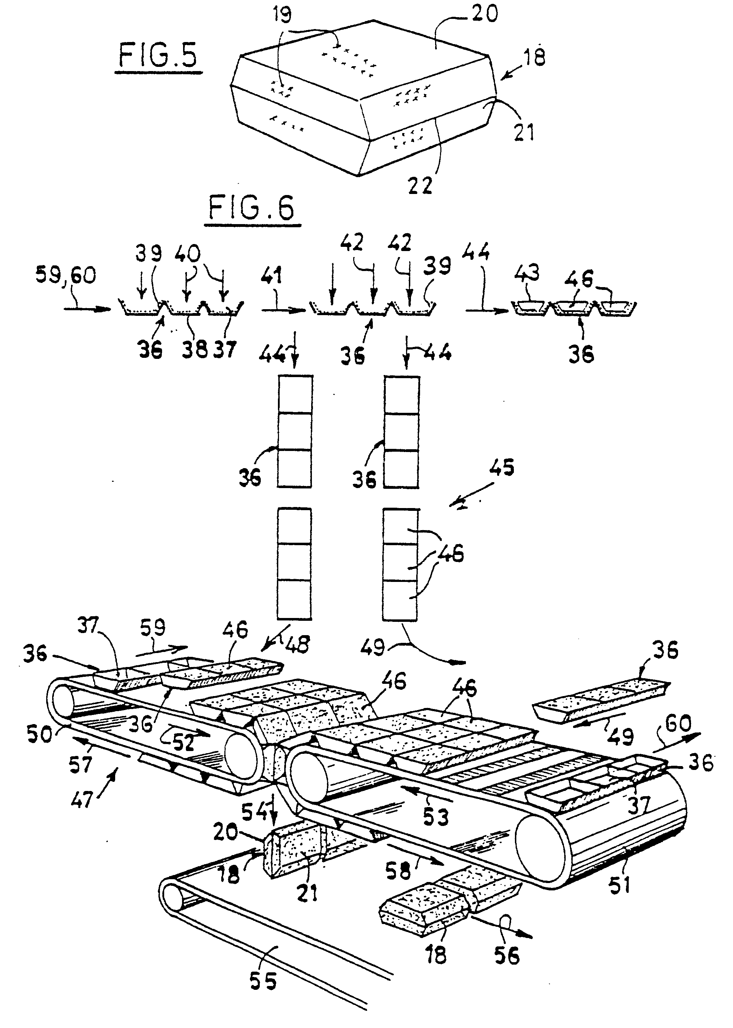

Chaque bloc 18 ainsi obtenu (figure 5) a alors extérieurement l'aspect d'un agglomérat de grains qui, dans la réalité, est formé d'un simple écran très fin (symbolisé par les croix 19) qui enveloppe en totalité les deux demi-conditionnements 20 et 21 au point que leur interface 22 est à peine visible.

Du fait qu'il enrobe totalement chaque bloc 18 de matière adhésive, cet écran de protection 19 lui évite tout collage ultérieur à une autre masse adhésive ainsi que toute agglutination d'impuretés. Chaque bloc 18 peut donc être transporté, ainsi qu'il est schématisé par la flèche 24, par exemple vers une ligne de cartonnage, où il est emballé, ou encore vers une ligne de marquage, où il reçoit toutes les indications propres à la composition enrobée (repère D de la figure 2).

Dans l'opération de collage entre elles des deux faces supérieures 11 des demi-conditionnements 23 et 33, il peut arriver que l'adhésivité de chaque surface soit insuffisance pour assurer l'association définitive des deux demi-conditionnements. Ceci sera par exemple le cas lorsque le refroidissement de la phase C a été trop important ou encore lorsque le caractère collant des matières est insuffisant. Dans ces deux cas, il suffit de procéder à une réactivation superficielle des surfaces 11, par exemple par apport de calories sous forme d'air chaud, laquelle permet à la matière de changer partiellement d'état en surface, de devenir pâteuse, et donc de mieux adhérer.

Après démoulage des conditionnements 18, les chambres 6 et 7 des demi-coquilles 3 et 4 sont dépoussiérées, ainsi qu'il est visible en 25 en phase E de la figure 2, et lesdites demi-coquilles sont ramenées en tête de la chaîne de conditionnement, ainsi qu'il est représenté par la flèche 26, où elles sont à nouveau protégées intérieurement par poudrage électrostatique avant d'être remplies de nouvelles masses de composition adhésive coulées.

Le cycle poudrage électrostatique — fixation électrique — coulage — refroidissement — contact par leurs surfaces supérieures horizontales nues des deux demi-conditionnements pour leur association par collage-démoulage-nettoyage des coquilles vides par dépoussiérage — est de nouveau reproduit continûment sur la chaîne de conditionnement représentée aux Figures 2 à 4.

Dans une seconde variante de réalisation d'une chaîne permettant le conditionnement en continu de masses adhésives auto-protégées, telle que représentée à la figure 6, les moules 36 sont formés chacun de plusieurs alvéoles 37 de forme troncpyramidale dont le fond 38 est la petite base et dont le sommet est ouvert. Les alvéoles troncpyramidales sont par exemple au nombre de trois par coquille 36.

En première phase, les faces intérieures de chaque alvéole 37 — fond 38 et parois latérales —

sont protégées par un écran 39 de matière poudreuse, déposé et maintenu cohérent par tout procédé électrostatique exposé ci-dessus. Le poudrage électrostatique est par exemple réalisé par pistoletage, les grains de la poudre étant véhiculés par air jusqu'à la tête de pulvérisation, elle-même équipée d'un pistolet à l'intérieur duquel s'effectue la charge positive de chaque grain, sous un potentiel élevé de l'ordre de 20 000 à 80 000 volts, à une très faible intensité de l'ordre de 2,5 microampères. Ce poudrage électrostatique est repéré par les références 40.

Chaque coquille 36 est ensuite déplacée selon la flèche 41 du poste de poudrage au poste de coulage de la chaîne travaillant en continu. Le coulage 42 de la composition adhésive est dosé volumétriquement de telle sorte que la masse de composition coulée affleure par son plan de surface horizontale 43 le sommet de chaque alvéole 37. Pendant toute l'opération de coulage, l'écran poudreux 39, fixé électriquement, a bien sûr conservé toute sa cohérence, si bien que la masse adhésive est parfaitement isolée des parois de l'alvéole par l'écran continu et homogène 39.

Du poste de coulage, les coquilles 36 sont déplacées selon la flèche 44 vers un poste de refroidissement repéré dans son ensemble par la référence 45. Le long de ce poste, les masses coulées 46 sont refroidies, par exemple par soufflage d'air frais ou par passage des coquilles dans un couloir de refroidissement, pour accélérer le durcissement et la mise en forme définitive de chaque masse conditionnée.

Avantageusement, les coquilles 36, rigoureusement identiques entre elles, progressent par deux le long du poste de refroidissement, de manière à alimenter aussi régulièrement que possible le poste de collage repéré dans son ensemble par 47.

A cet instant, la force d'attraction des grains de l'écran poudreux 39 vers les parois de chaque alvéole 37 est atténuée, voire annulée, tandis que l'adhésivité de la composition coulée 46 augmente. Ainsi, l'écran de matière poudreuse s'est progressivement dissocié de la face intérieure de l'alvéole pour se coller préférentiellement en surface de la masse coulée et protéger celle-ci. Le démoulage de chaque masse coulée et son collage par sa surface supérieure nue sur un autre demi-conditionnement rigoureusement identique peut donc être librement conduit.

A cette fin, les coquilles 36 refroidies par paires alimentent selon 48 et 49 un convoyeur formé de deux bandes symétriques, respectivement 50 et 51, se faisant face par leur bout. Les bandes 50 et 51 sont animées de deux mouvements rectilignes, de même vitesse, de sens contraires, repérés selon 52 et 53 respectivement, tels que dans la zone où les bandes se font face lesdits mouvements soient symétriques, et descendants.

Les coquilles pleines 36 sont placées côte-à-côte sur chaque bande 50-51 et progressent donc du même mouvement vers la zone d'aboutement des bandes dans laquelle s'opère sous pression le contact entre les faces supérieures nues 43 de deux demi-conditionnements remplissant deux alvéoles 37 en vis-à-vis.

En fin de mouvement descendant, après contact sous pression de deux demi-conditionnements se faisant face, les blocs 18 de composition adhésive totalement et parfaitement enrobés de l'écran de matière poudreuse chutent par gravité selon 54 et tombent sur un tapis convoyeur 55 transportant lesdits blocs selon 56, vers un poste de cartonnage ou de marquage.

Dans le même temps, les demi-coquilles vides 36, par exemple maintenues magnétiquement sur les bandes 50 et 51, sont ramenées des brins inférieurs des bandes jusqu'aux brins supérieurs, selon des mouvements repérés par 57 et 58 respectivement, pour être éjectées, respectivement selon des mouvements 59 et 60, et ramenées après nettoyage au poste de poudrage électrostatique.

Les opérations précitées sont reconduites selon le cycle complet exposé ci-dessus.

Dans l'installation de la figure 1a dans laquelle le moule est en une seule partie et ouvert vers le haut, il est bien clair qu'après la coulée 10 puis le durcissement à l'intérieur du moule de la masse 13 de composition adhésive, la surface horizontale supérieure de cette masse 13 n'est pas protégée, donc est collante. Dans une telle mise en œuvre, la surface 11 du bloc 13 est protégée avant démoulage du conditionnement, soit par enduction d'une matière liquide grasse, telle celle qui est commercialisée sous la marque « Teepol », soit par saupoudrage (par pulvérisation à l'aide d'un pistolet ou par rideau délivré par un distributeur à vis ou par un distributeur électrostatique) de grains 27 d'une poudre appropriée, laquelle peut être la même que celle qui a permis la formation de l'écran 9, ou différente de cette matière d'écran tout en appartenant à une gamme de matières également compatibles avec la composition adhésive pour les applications envisagées par l'utilisateur.

Dans ce contexte, les matières poudreuses réservées à la confection des écrans de protection, 9 et éventuellement 27, présenteront avantageusement les qualités suivantes :

être aptes naturellement, ou après traitement, à la charge électrique nécessaire à la projection électrostatique,

être de préférence fusibles,

être compatibles avec la composition adhésive conditionnée,

ne pas modifier les propriétés intrinsèques de cette composition dans ses caractéristiques typiques, telles que viscosité et point de figeage.

De nombreuses matières poudreuses minérales, organiques, organo-métalliques ou végétales conviennent à cet égard, parmi lesquelles :

le carbonate de calcium et la bentonite qui, intégrés à une formulation, diminuent le prix de la composition,

le sulfate de baryum, qui rend la masse adhésive radio-détectable,

les oxydes de titane et de zinc, qui constituent des premières charges de la composition,

l'oxyde d'antimoine, pour l'ignifugation de la composition,

le talc, qui permet de contrôler le « tack » en formulation, et la craie,

les silices colloïdales et autres,

les cires dures, les cires de polyéthylène, les cires de polyéthylène modifiées,

un polymère en poudre (polyéthylène, polypropylène, EVA),

un hot-melt ou une résine en poudre,

un agent anti-oxydant ou anti-UV, par exemple dérivé du phénol,

une gomme naturelle (arabique),

de l'amidon, de la farine d'os, de la farine de guar.

La quantité de matière poudreuse qui protège tout bloc 13 ou 18, ou encore tout profilé résultant de la mise en œuvre du procédé décrit ci-dessus, constitue en toute hypothèse une quantité infinitésimale en poids relativement à la masse de la composition adhésive protégée. Que l'application de cette matière poudreuse résulte de la formation de l'écran 19 par phénomène électrostatique, ou résulte de la formation de l'écran 27 par saupoudrage, il y a donc tout intérêt à ce que la quantité de matière constituant l'écran 19 et/ou l'écran 27 soit dosée très précisément relativement au poids de la masse conditionnée, surtout si la matière de l'écran 19 et/ou de l'écran 27 est autre chose qu'une charge inerte et, par exemple, a pour rôle de protéger la composition adhésive (agent anti-oxydant, agent anti-UV ou agent d'ignifugation) ou de simplifer sa mise en œuvre par l'utilisateur final (plastifiant). Il est donc souhaitable que, dans certaines applications, la quantité de matière constituant les écrans 19 et/ou 27 soit dosée aussi pécisément que possible. A cet effet, une solution consiste à former l'écran 9 par superposition de mini-écrans, c'est-à-dire par applications successives — par pistoletage ou par fluidisation — de grains de matière poudreuse qui ensuite, puisqu'ils sont tous fixés électriquement, s'associent de manière à former un film homogène d'une épaisseur plus importante, et aussi plus facile à déterminer avec précision, que l'épaisseur d'un écran résultant d'une opération unique de pistoletage ou de fluidisation.

Pour le cas où la quantité de grains de matière poudreuse ayant assurée la formation en une ou plusieurs couches de l'écran 19 et/ou de l'écran 27 serait en excès, et où cet excès serait nocif à la bonne conduite des manipulations ultérieures, ladite quantité en excès sera récupérée après démoulage de chaque bloc 13-18, sur les couches les plus extérieures, et elle sera éventuellement recyclée pour d'autres opérations de poudrage électrostatique, notamment dans les cas où le prix volumique de la matière de protection en question est élevé.

Il est bien clair que l'élimination de la ou des couches les plus extérieures de l'écran 19 et/ou de l'écran 27 ne concernera jamais la couche au contact direct de la matière conditionnée, ladite couche étant irréversiblement associée à ladite matière du fait des qualités intrinsèques d'adhésivité de celle-ci.

Naturellement, l'invention n'est pas limitée aux modes d'application non plus qu'aux modes de réalisation qui ont été mentionnés et l'on pourrait concevoir diverses variantes sans sortir pour autant du cadre de ladite invention, telle que définie par les revendications.

Il en est ainsi notamment de la conformation du moule, qui peut être en deux ou plus de deux parties, lesquelles au surplus sont solidaires et articulées entre elles ou indépendantes et dans ce cas susceptibles d'être assemblées par encliquetage, boulonnage ou tout autre moyen. Ainsi, le fond peut être par exemple d'une hauteur différente de celle du couvercle, l'important étant que les surfaces supérieures nues de chaque demi-conditionnement, obtenu après durcissement dans ce fond et dans ce couvercle respectivement, soient semblables pour être collées l'une à l'autre de manière à former un bloc sans saillie.

Il en est de même en ce qui concerne le moule utilisable pour le coulage par injection. Dans ce cas, le moule est formé d'un fond en forme de cuvette et d'un couvercle plan, ledit fond et ledit couvercle étant associés par boulonnage avant injection, de sorte à résister à la pression exercée par le produit injecté. L'orifice d'injection sera prévu en milieu de couvercle ou en partie haute d'une des parois latérales de la cuvette formant fond.

Une telle construction à fond creux et à couvercle plat pourra également servir pour un coulage traditionnel par simple gravité de la composition à conditionner, le moule étant dans ce cas ouvert à l'instant du coulage alors que les faces intérieures du fond et du couvercle sont protégées par poudrage, le couvercle étant ensuite rabattu sur et rendu solidaire du fond, de sorte qu la surface supérieure de la masse coulée soit protégée identiquement à toute ses autres faces.

Le fond et le couvercle seront désaccouplés après durcissement et mise en forme de la masse coulée et protégée par écran.

## Revendications

1. Procédé de conditionnement, sous forme de bloc (18) ou de profilé, d'une composition adhésive permanente enrobée de grains (19) de matière poudreuse, pour éviter lors des opérations de stockage et de manutention dudit conditionnement, démoulé ou transporté à même un moule, son collage à un autre conditionnement (18) ou son agglomération à des impuretés, ledit procédé comprenant l'étape de la coulée de ladite composition dans le moule (1, 2, 36), pour la mise en forme du conditionnement, et étant caractérisé en ce que, avant coulée (10, 42), on réalise sur la totalité de la face intérieure du moule un écran (9, 39) de matière poudreuse, en ce que l'on maintient cohérent ledit écran pendant toute l'opération de coulage de sorte qu'il y ait liaison permanente des grains de la matière poudreuse entre eux, la formation de l'écran poudreux et le maintien de sa cohérence étant obtenus par voie électrostatique, et en ce que, après durcissement et mise en forme, on démoule un conditionnement dont toutes les surfaces antérieurement en regard de la face intérieure du moule sont protégées par l'écran de matière poudreuse.

2. Procédé selon la revendication 1, dans lequel on procède au coulage de la composition adhésive permanente dans un moule (1) formé de deux parties (3, 4), de préférence symétriques articulées l'une et l'autre autour d'un axe commun (14), caractérisé en ce que l'on réalise électrostatiquement l'écran (9) sur la totalité des faces intérieures de chaque partie (3, 4), en ce que l'on coule la composition adhésive dans la chambre (6, 7) de chaque partie (3, 4) jusqu'à ce qu'elle forme un plan de surface (11) affleurant le sommet de chaque chambre, l'écran étant maintenu cohérent sur les parois des chambres pendant toute l'opération de coulage, toujours par électrostatique, en ce que l'on refroidit les deux demi-conditionnements (23, 33) contenus, respectivement, dans les chambres (6, 7), en ce que l'on relève les deux parties du moule jusqu'à mettre en contact les faces non protégées (11) des deux demi-conditionnements, (23, 33), en ce que l'on colle l'un sur l'autre lesdits deux demi-conditionnements, en ce que l'on bascule l'ensemble alors constitué des deux parties (3, 4), que l'on dissocie lesdites deux parties et enfin que l'on démoule un conditionnement (18) enrobé entièrement de grains (19).

3. Procédé selon la revendication 1, dans lequel on procède au coulage de la composition adhésive permanente dans un moule (36) formé de plusieurs alvéoles (37), caractérisé en ce que l'on réalise électrostatiquement l'écran (39) sur la totalité des faces intérieures de chaque alvéole (37), en ce que l'on coule la composition adhésive dans chaque alvéole jusqu'à ce qu'elle forme un plan de surface (43) affleurant le sommet de chaque alvéole, l'écran étant maintenu cohérent sur les parois des alvéoles pendant toute l'opération de coulage, toujours par électrostatique, en ce que l'on refroidit les masses (46) coulées contenues dans les alvéoles, chaque masse (46) représentant alors un demi-conditionnement, en ce que l'on place en face du moule un second moule (36) identique, dont les alvéoles sont également remplies de masses (46) qui ont été coulées identiquement, en ce que l'on met en contact les faces non protégées (43) des masses (46) constituant chacune un demi-conditionnement, en ce que l'on presse sur les deux moules pour coller deux à deux tous les demi-conditionnements se faisant face, et en ce que l'on démoule des conditionnements (18) enrobés entièrement de grains (19).

4. Procédé selon les revendications 2 et 3 caractérisé en ce que, avant la mise en contact des faces non protégées (11, 43), on réactive superficiellement lesdites faces pour changer partiellement d'état en surface la matière coulée.

5. Procédé selon la revendication 1, dans lequel on procède au coulage (10) de la composition adhésive permanente dans un moule (2) ouvert à sa partie supérieure, caractérisé en ce que, après durcissement et avant démoulage : a) on saupoudre la face supérieure (11) sensiblement horizontale du conditionnement mis en forme de grains (27) d'une matière poudreuse identique ou différente de celle disposée en écran (9) entre la face intérieure du moule (2) et les surfaces en regard du conditionnement, ou b) on enduit d'une matière liquide grasse ladite face supérieure (11) du conditionnement, pour la protéger.

6. Procédé selon l'une des revendications 1 à 5, caractérisé en ce que l'écran (9, 39) est obtenu par superposition de plusieurs couches de grains de matière poudreuse dont, après démoulage, on récupère éventuellement les couches les plus extérieures.

7. Procédé selon l'une quelconque des revendications 1 à 6, caractérisé en ce que la matière qui constitue l'écran (9, 39) de matière poudreuse est une partie de la charge, dans le cas particulier où la composition adhésive permanente doit être chargée, ou encore tout ou partie de l'un des constituants de la formulation idéale, par exemple un produit anti-oxydant ou un produit ignifugeant.

8. Dispositif pour la mise en œuvre du procédé selon l'une quelconque des revendications 1 à 7, comprenant un moule (1, 2, 36) pour recevoir la coulée (10, 42) de la composition adhésive permanente et pour mettre en forme le conditionnement à réaliser à partir de cette composition, caractérisé en ce qu'il comprend des moyens (A, 40) pour former sur la totalité de la face intérieure de ce moule un écran (9, 39) de matière poudreuse, des moyens pour rendre chaque grain de la matière poudreuse porteur d'une charge électriquement positive, afin de former sur la totalité de la face intérieure de ce moule un écran de matière poudreuse, des moyens (8) pour mettre le moule à la terre ou à la masse et ainsi maintenir cet écran cohérent par voie électrostatique pendant toute l'opération de coulage, et des moyens pour démouler le conditionnement en sorte que toutes les surfaces antérieurement en regard de la face intérieure du moule soient protégées par l'écran de matière poudreuse.

9. Dispositif selon la revendication 8, caractérisé en ce que le moule (1) est formé en au moins deux parties, dénommées respectivement fond (3) et couvercle (4), sur la totalité de la face intérieure de chacune desquelles est réalisé et maintenu cohérent un écran (9) de matière poudreuse et qui reçoivent chacune une coulée (10) de la composition adhésive permanente.

10. Dispositif selon la revendication 8 caractérisé en ce que le moule (36) est formé de plusieurs alvéoles (37) destinées chacune à recevoir une coulée pour un demi-conditionnement (46).

11. Dispositif selon les revendications 5, 9 et 10, caractérisé en ce qu'il comprend des moyens (14, 34, 35, 50, 51) pour rapprocher les deux parties (3, 4, 37) du moule et mettre en contact les faces supérieures (11, 43) de chaque demi-conditionnement (23, 33, 46) mis en forme dans l'une et l'autre parties du moule, et des moyens pour faire adhérer fortement les deux demi-conditionnements.

12. Dispositif selon la revendication 8, destiné plus particulièrement à la mise en œuvre du procédé selon la revendication 5, caractérisé en ce qu'il comprend un moule (2) ouvert à sa partie supérieure, des moyens (8) pour former et maintenir cohérent sur la totalité de la face intérieure de ce moule un écran (9) de matière poudreuse, des moyens (10) pour couler la composition adhésive permanente à l'intérieur du moule tout en maintenant parfaitement cohérent l'écran de matière poudreuse, des moyens pour protéger la face supérieure (11) sensiblement horizontale du conditionnement mis en forme, soit par saupoudrage de grains (27) d'une matière poudreuse, soit par enduction d'une matière liquide grasse, et des moyens pour démouler le conditionnement (13) ainsi totalement protégé.

13. Dispositif selon la revendication 8, caractérisé en ce que le moule est formé en deux parties, respectivement un fond et un couvercle plan, qui sont revêtues l'une et l'autre sur la totalité de leur face intérieure d'un écran de matière poudreuse déposé et maintenu cohérent par phénomène électrostatique, le fond du moule étant destiné à recevoir toute la coulée de la composition adhésive permanente, ladite coulée étant alors réalisée soit par gravité, moule ouvert, soit par injection, moule fermé.

**Claims**

1. Method for conditioning, in the form of blocks (18) or sections, a permanent adhesive composition coated with grains (19) of pulverulent material, so that during operations of storing and handling the said conditioning, removed from the mould or transported in a mould, it can be prevented from sticking to another conditioning (18) or agglomerating with impurities, the said method comprising the stage of casting the said composition into the mould (1, 2, 36) for the shaping of the conditioning, and being characterised in that, before casting (10, 42), there is formed over all the internal face of the mould a shield (9, 39) of pulverulent material, in that the said shield is kept cohesive during the entire operation of casting so that there is permanent connection of the grains of pulverulent material with one another, the formation of the pulverulent shield and the maintaining of its cohesiveness being obtained by electrostatic means, and in that, after hardening and shaping, a conditioning is removed from the mould whereof all the surfaces previously facing the internal face of the mould are protected by the shield of pulverulent material.

2. Method according to claim 1, wherein the permanent adhesive composition is cast into a mould (1) formed of two parts (3, 4) preferably symmetrical and articulated to one another for movement about a common axis (14), characterised in that the shield (9) is formed electrostatically over the whole of the internal faces of each part (3, 4), in that the adhesive composition is cast into the chamber (6, 7) of each part (3, 4) until it forms a surface plane (11) flush with the top of each chamber, the shield being kept cohesive on the walls of the chambers during the entire casting operation, again by electrostatic means, in that the two half-conditionings (23, 33) contained respectively in the chambers (6, 7) are cooled, in that the two parts of the mould are lifted to bring the non-protected faces (11) of the two half-conditionings (23, 33) into contact, in that the said two half-conditionings are adhesively secured to one another, in that the assembly then constituted by the two parts (3, 4) is swung over, that the two said parts are separated, and finally that a conditioning (18) entirely coated with grains (19) is taken from the mould.

3. Method according to claim 1, wherein the permanent adhesive composition is cast into a mould (36) formed of a plurality of compartments (37), characterised in that the shield (39) is formed electrostatically on all the internal faces of each compartment (37), in that the adhesive composition is cast into each compartment until it forms a surface plane (43) flush with the top of each compartment, the shield being maintained cohesive on the walls of the compartments during the entire casting operation, still by electrostatic means, in that the masses (46) cast in the compartments are cooled, each mass (46) then representing a half-conditioning, and that there is placed opposite the mould a second identical mould (36) whose compartments are likewise filled with masses (46) which have been cast identically, and in that the non-protected faces (43) of the masses each constituting a half-conditioning are brought into contact, in that pressure is applied on the two moulds for securing adhesively together in two all the half-conditionings which face one another, and in that conditionings (18) entirely coated with grains (19) are taken from the moulds.

4. Method according to claims 2 and 3, characterised in that, before the non-protected faces (11, 43) are brought into contact, the said faces are reactivated superficially to partly change the surface state of the cast material.

5. Method according to claim 1, wherein the permanent adhesive composition is cast (10) into a mould (2) which is open at its top region, characterised in that, after hardening and before removal from the mould: a) the substantially horizontal upper face (11) of the shaped conditioning is sprinkled with grains (27) of a pulverulent material identical to or different from that provided as a shield (9) between the internal face of the mould (2) and the opposite surfaces of the conditioning, or b) a fatty liquid substance is coated on to the said upper face (11) of the conditioning to protect said face.

6. Method according to one of claims 1 to 5, characterised in that the shield (9, 39) is obtained by superposing a plurality of layers of grains of pulverulent material, of which the outermost layers are possibly recovered after removal from the mould.

7. Method according to any one of claims 1 to 6, characterised in that the material which constitutes the shield (9, 39) of pulverulent material is a part of the filler in the particular case where the permanent adhesive composition is to be filled, or all of or part of one of the constituents of the ideal formulation, for example an anti-oxidant product or a fireproofing product.

8. Plant for carrying out the method according to any one of claims 1 to 7, comprising a mould (1, 2, 36) into which the permanent adhesive material is cast (10, 42) and which serves to shape the conditioning to be produced from this composition, characterised in that it comprises means (A, 40) for forming on the whole of the internal face of this mould a shield (9, 39) of pulverulent material, means for making each grain of the pulverulent material carry an electrically positive charge for forming a shield of pulverulent material over all of the internal face of this mould, means (8) for connecting the mould to earth or to the chassis and thus keeping the said shield cohesive by electrostatic means during the entire casting operation, and means for removing the conditioning from the mould so that all the surfaces previously facing the internal face of the mould are protected by the shield of pulverulent material.

9. Plant according to claim 8, characterised in that the mould (1) is formed of at least two parts referred to respectively as the bottom part (3) and cover part (4), on the whole of the internal face of each of which parts there is produced and maintained in cohesive state a shield (9) of pulverulent material, and which parts each have permanent adhesive composition cast into them (10).

10. Plant according to claim 8, characterised in that the mould (36) is formed of a plurality of compartments (37) intended each to have a half-conditioning (46) cast in it.

11. Plant according to claims 5, 9 and 10, characterised in that it comprises means (14, 34, 35, 50, 51) for moving the two parts (3, 4, 37) of the mould towards one another and bringing into contact the upper faces (11, 43) of each half-conditioning (23, 33, 46) which has been shaped in the respective parts of the mould, and means for making the two half-conditionings adhere strongly.

12. Plant according to claim 8, intended especially for carrying out the method according to claim 5, characterised in that it comprises an open-top mould (2), means (8) for forming and keeping in a cohesive state over all of the internal face of this mould a shield (9) of pulverulent material, means (10) for casting the permanent adhesive composition in the inside of the mould whilst keeping the shield of pulverulent material perfectly cohesive, means for protecting the substantially horizontal upper face (11) of the shaped conditioning, either by sprinkling-on grains (27) of pulverulent material or by coating-on a fatty liquid substance, and means for removing from the mould the conditioning (13) which has been thus completely protected.

13. Plant according to claim 8, characterised in that the mould is made in two parts, respectively a bottom part and a cover part of flat form, which are both covered over all their internal face with a shield of pulverulent material which is deposited and kept in a cohesive state by electrostatic means, the bottom part of the mould being then intended to have all the permanent adhesive composition cast into it, casting being then effected either by gravity with the mould open or by injection with the mould closed.

## Patentansprüche

1. Verfahren zur Aufmachung, in Blockform (18) oder Profilform, einer haftenden permanenten, von Körnern (19) ummantelten Zusammensetzung aus pulverförmigem Material, um gelegentlich von Maßnahmen der Lagerung und der Handhabung der genannten Aufmachung, wenn dieselbe entformt ist oder eine Form direkt befördert wird, ihr Haften an einer anderen Aufmachung (18) oder ihre Agglomerierung an Verunreinigungen zu vermeiden, welches Verfahren die Stufe des Gießens der genannten Zusammensetzung in die Form (1, 2, 36), um die Aufmachung in Form zu bringen, umfaßt, dadurch gekennzeichnet, daß man vor dem Gießen (10, 42) auf der Gesamtheit der inneren Fläche der Form eine Abschirmung (9, 39) aus pulverförmigem Material vorsieht, daß man die genannte Abschirmung während des gesamten Gießvorganges derart zusammenhängend hält, daß eine permanente Bindung der Körner aus pulverförmigem Material untereinander besteht, wobei die Bildung der pulverförmigen Abschirmung und die Aufrechterhaltung von deren Zusammenhang auf elektrostatischem Wege erzielt werden, und daß man nach Erhärten und Formen eine Aufmachung entformt, von der alle Oberflächen, die vorher der inneren Fläche der Form gegenüberlagen, durch die Abschirmung aus pulverförmigem Material geschützt sind.

2. Verfahren nach Anspruch 1, worin man das Gießen der haftenden permanenten Zusammensetzung in eine Form (1), bestehend aus zwei vorzugsweise symmetrischen Teilen (3, 4), von denen der eine und der andere rund um eine gemeinsame Achse (14) schwenkbar sind, durchführt, dadurch gekennzeichnet, daß man die Abschirmung (9) auf der Gesamtheit der inneren Flächen eines jeden Teiles (3, 4) elektrostatisch bewerkstelligt, daß man die haftende Zusammensetzung in die Kammer (6, 7) eines jeden Teiles (3, 4) gießt, bis sie eine ebene, das obere Ende einer jeden Kammer ausgleichende Oberfläche (11) bildet, wobei die Abschirmung auf den Wänden der Kammern während des gesamten Gießvorganges, immer durch Elektrostatik, zusammenhängend gehalten wird, daß man die zwei in den Kammern (6, 7) enthaltenen Halbaufmachungen (23, 33) kühlt, daß man die zwei Teile der Form anhebt, bis man die nicht geschützten Flächen (11) der zwei Halbaufmachungen (23, 33) in Berührung bringt, daß man von den zwei Halbaufmachungen die eine auf die andere klebt, daß man das aus den zwei Teilen (3, 4) gebildete Ganze kippt, daß man die genannten zwei Teile trennt und daß man schließlich eine zur Gänze von Körnern (19) ummantelte Aufmachung (18) entformt.

3. Verfahren nach Anspruch 1, worin man das Gießen der haftenden permanenten Zusammensetzung in eine aus mehreren Zellen (37) gebildete Form (36) durchführt, dadurch gekennzeichnet, daß man elektrostatisch die Abschirmung (39) auf die Gesamtheit der inneren Flächen einer jeden Zelle (37) bringt, daß man die haftende Zusammensetzung in jede Zelle gießt, bis sie eine ebene Oberfläche (43) bildet, welche das obere Ende einer jeden Zelle ausgleicht, wobei die Abschirmung auf den Wänden der Zellen während des gesamten Gießvorganges, immer durch Elektrostatik, zusammenhängend gehalten wird, daß man die in den Zellen enthaltenen, gegossenen Massen (46) kühlt, wobei jede Masse (46) dann eine Halbaufmachung darstellt, daß man gegenüber der Form eine zweite, identische Form (36) anordnet, deren Zellen desgleichen mit Massen (46) erfüllt sind, die auf gleiche Weise gegossen wurden, daß man die nicht geschützten Flächen (43) der Massen (46) in Berührung bringt, wobei jede eine Halbaufmachung bildet, daß man auf die zwei Formen Druck ausübt, um alle Fläche an Fläche liegenden Halbaufmachungen je zwei und zwei zu verkleben, und daß man die zur Gänze von Körnern (19) ummantelten Aufmachungen (18) entformt.

4. Verfahren nach den Ansprüchen 2 und 3, dadurch gekennzeichnet, daß man, bevor man die nicht geschützen Flächen (11, 43) in Berührung bringt, die genannten Flächen künstlich reaktiviert, um den Oberflächenzustand des gegossenen Materials teilweise zu ändern.

5. Verfahren nach Anspruch 1, worin man das Gießen (10) der haftenden permanenten Zusammensetzung in eine in ihrem oberen Teil offene Form (2) durchführt, dadurch gekennzeichnet, daß man nach dem Erhärten und vor dem entformen : die deutlich horizontale obere Fläche (11) der geformten Aufmachung mit Körnern (27) aus einem pulverförmigen Material bestäubt, welches dem in der Abschirmung (9) zwischen der inneren Fläche der Form (2) und den gegenüberliegenden Oberflächen der Aufmachung angeordneten gleich ist oder davon verschieden ist, oder b) die genannte obere Fläche (11) der Aufmachung mit einem fetten, flüssigen Material überzieht, um sie zu schützen.

6. Verfahren nach einem der Ansprüche 1 bis 5, dadurch gekennzeichnet, daß die Abschirmung (9, 39) erhalten wird durch Überlagerung von mehreren Schichten von Körnern aus pulverförmigem Material, wovon man nach Entformen gegebenenfalls die äußersten Schichten wiedergewinnt.

7. Verfahren nach einem der Ansprüche 1 bis 6, dadurch gekennzeichnet, daß das Material, welches die Abschirmung (9, 39) aus pulverförmigem Material darstellt, ein Teil der Beladung ist, in dem besonderen Fall, in dem die haftende permanente Zusammensetzung beladen werden soll, oder auch die Gesamtheit oder ein Teil von einem der Bestandteile der idealen Formulierung, beispielsweise ein antioxidierendes oder ein feuerfest machendes Produkt.

8. Vorrichtung zur Durchführung des Verfahrens nach einem der Ansprüche 1 bis 7, umfassend eine Form (1, 2, 36) um den Guß (10, 42) der haftenden permanenten Zusammensetzung aufzunehmen und die ausgehend von dieser Zusammensetzung herzustellende Aufmachung zu formen, dadurch gekennzeichnet, daß sie umfaßt : Einrichtungen (A, 40), um auf der Gesamtheit der inneren Fläche dieser Form eine Abschirmung (9, 39) aus pulverförmigem Material zu bilden ; Einrichtungen, um jedes Korn des pulverförmigen Materials zum Träger einer positiven elektrischen Ladung zu machen, um auf der Gesamtheit der inneren Fläche der Form eine Abschirmung aus pulverförmigem Material zu bilden ; Einrichtungen (8), um die Form auf Erde oder auf Masse zu legen, und so auf elektrostatischem Wege während des gesamten Gießvorganges diese Abschirmung zusammenhängend zu halten ; und Einrichtungen, um die Aufmachung zu entformen, so daß alle vorher der inneren Fläche der Form gegenüberliegenden Oberflächen durch die Abschirmung aus pulverförmigem Material geschützt sind.

9. Vorrichtung nach Anspruch 8, dadurch gekennzeichnet, daß die Form (1) aus wenigstens zwei Teilen gebildet ist, welche Boden (3) bzw. Deckel (4) benannt sind, wobei auf der Gesamtheit der inneren Fläche eines jeden dieser Teile eine Abschirmung (9) aus pulverförmigem Material vorgesehen ist und zusammenhängend gehalten wird, wobei jeder derselben einen Guß (10) der haftenden permanenten Zusammensetzung aufnimmt.

10. Vorrichtung nach Anspruch 8, dadurch gekennzeichnet, daß die Form (36) aus mehreren Zellen (37) gebildet ist, deren jede dazu bestimmt ist, einem Guß für eine Halbaufmachung (46) aufzunehmen.

11. Vorrichtung nach den Ansprüchen 5, 9 und 10, dadurch gekennzeichnet, daß sie Einrichtungen (14, 34, 35, 50, 51) umfaßt, um die zwei Teile (3, 4, 37) der Form anzunähern und die oberen Flächen (11, 43) jeder der in den einen und anderen Teilen der Form geformten Halbaufmachungen (23, 33, 46) in Berührung zu bringen, und Einrichtungen umfaßt, um die zwei Halbaufmachungen fest aneinanderzuheften.

12. Vorrichtung nach Anspruch 8, insbesondere bestimmt zur Durchführung des Verfahrens nach Anspruch 5, dadurch gekennzeichnet, daß sie umfaßt : Eine in ihrem oberen Teil offene Form (2) ; Einrichtungen (8), um auf der Gesamtheit der inneren Fläche dieser Form eine Abschirmung (9) aus pulverförmigem Material zu bilden und zusammenhängend zu halten ; Einrichtungen (10), um die haftende permanente Zusammensetzung in das Innere der Form zu gießen, immer die Abschirmung aus pulverförmigem Material vollständig zusammenhängend haltend ; Einrichtungen, um die deutlich horizontale obere Fläche (11) der geformten Aufmachung zu schützen, entweder durch Bestäuben mit Körnern (27) aus einem pulverförmigen Material oder durch Überziehen mit einem flüssigen fetten Material ; und Einrichtungen, um die derart vollständig geschützte Aufmachung (13) zu entformen.

13. Vorrichtung nach Anspruch 8, dadurch gekennzeichnet, daß die Form in zwei Teilen gebildet ist, einem Boden bzw. einem ebenen Deckel, welche — der eine und der andere — auf der Gesamtheit ihrer inneren Fläche mit einer Abschirmung aus pulverförmigem Material verkleidet sind, die durch elektrostatische Erscheinung abgelagert und zusammenhängend gehalten ist, wobei der Boden der Form dazu bestimmt ist, den gesamten Guß der haftenden permanenten Zusammensetzung aufzunehmen und der genannte Guß dann entweder durch Schwerkraft bei offener Form oder durch Injizieren bei geschlossener Form durchgeführt ist.

FIG.1a

FIG.1b

FIG.2

FIG.3

FIG.4

0 137 027

FIG.5

FIG.6